# EUROPÄISCHE PATENTSCHRIFT

(11) **EP 1 761 732 B1**
(45) Veröffentlichungstag und Bekanntmachung des Hinweises auf die Patenterteilung: **03.06.2009**
(21) Anmeldenummer: 05755461.0
(22) Anmeldetag: 28.06.2005
(51) Int. Cl.: F24D 19/08, F16K 24/04

(54) **SCHNELLENTLÜFTER**
AIR VENT
PURGEUR D'AIR

(30) Priorität: 29.06.2004 DE 102004031225
(43) Veröffentlichungstag der Anmeldung: 14.03.2007
(73) Patentinhaber: IMT ARMATUREN AG, 9434 Au (CH)
(72) Erfinder: DUMRATH, Rainald, CH-9436 Balgach (CH)
(74) Vertreter: Patent- und Rechtsanwaltssozietät Maucher, Börjes & Kollegen
(86) Internationale Anmeldenummer: PCT/EP2005/006944
(87) Internationale Veröffentlichungsnummer: WO 2006/000453

(56) Entgegenhaltungen:
- EP-A- 0 652 406
- EP-A- 1 184 221
- DE-A1- 2 647 648
- DE-U1- 9 412 420
- US-A- 5 931 183

## Beschreibung

Die Erfindung bezieht sich auf einen Schnellentlüfter für Heizungssysteme, der in einem Entlüftergehäuse ein Schwimmerventil aufweist, welches einer Luftaustrittsöffnung vorgeschaltet ist, wobei der im Entlüftergehäuse verschieblich geführte und mit dem Schwimmerventil zusammenwirkende Schwimmer hut- oder glockenförmig ausgebildet ist, wobei der Schwimmer-Innenraum des hut- oder glockenförmigen Schwimmers über zumindest eine Entlüftungsöffnung zu entlüften ist, und wobei das Entlüftergehäuse eine im Schwimmer-Innenraum des hut- oder glockenförmigen Schwimmers mündende Zuströmöffnung hat. Ein Schnellentlüfter gemäß Oberbegriff von Anspruch 1 ist z.B. aus dem Dokument US-A-5 931 183 bekannt.

Bei der Neuinstallation oder bei der Reparatur einer Wasserheizung muss beim Einlaufen des Heizwassers die in den Rohren befindliche Luft austreten können. Zur Entlüftung des Heizungssystems ist es bereits bekannt, an den Heizkörpern Einzelventile vorzusehen, die zum Ablassen der Luft mittels eines Schlüssels geöffnet werden können. Da dabei die Einzelventile an den einzelnen Heizkörpern getrennt voneinander geöffnet und nach dem Entlüften des jeweiligen Heizkörpers wieder geschlossen werden müssen, kann sich hierbei der Entlüftungsvorgang mühsam und zeitintensiv gestalten.

Man hat daher auch bereits einen Schnellentlüfter geschaffen, der in einem Entlüftergehäuse ein Schwimmerventil aufweist, welches einer Luftaustrittsöffnung vorgeschaltet ist. Um beim Hochsteigen des in das Heizungssystem einlaufenden Wassers die Entlüftungsöffnung des Schnellentlüfters mittels des Schwimmerventiles automatisch verschließen zu können, muß dieser vorbekannte Schnellentlüfter regelmäßig an der höchsten Stelle des Heizungssystems angeordnet sein.

Die Entlüftung des Heizungssystemes mit Hilfe des vorbekannten Entlüfters erfolgt weitestgehend automatisch und ist daher im Vergleich zu herkömmlichen Einzelventilen mit einer wesentlichen Zeitersparnis verbunden. Problematisch ist allerdings, dass der Ventilsitz durch eventuell verschmutztes Wasser in den Rohrleitungen undicht werden kann, so dass das Wasser aus dem Schnellentlüfter überläuft und eventuell auch entsprechende Wasserschäden verursacht.

Man hat daher auch bereits verschiedene Schnellentlüfter geschaffen, bei denen der Schließmechanismus des Schwimmerventils soweit vom Niveau des im Schnellentlüfter-Gehäuse befindlichen Mediums getrennt ist, dass das Medium und insbesondere die darin eventuell mitgeführten Schmutzpartikel nicht bis zum Schließmechanismus gelangen können. Dies wird bei den im Markt befindlichen Schnellentlüftern durch einen entsprechenden Abstand zwischen dem Niveau des Mediums und dem Schließmechanismus des Schwimmerventils erreicht. Dieser Abstand muß allerdings mitunter sehr groß sein, da durch Blasenbildung und/oder schnelleintretendes Medium Spritzer entstehen, die ebenfalls Schmutzpartikel mit sich führen können.

So ist beispielsweise aus der US-A-5 931 183 ein Entlüftüngs-Ventil für geschlossene Behälter bekannt, das ein Schwimmerventil aufweist, das mit einem in einer Kammer angeordneten Schwimmer gekoppelt ist, wobei das Schwimmerventil je nach Flüssigkeitsstand eine Entlüftungsöffnung freigibt oder verschließt.

Aus der DE 26 47 648 A ist ein Luftablassventil bekannt, das ebenfalls ein mit einem Schwimmkörper verbundenes Schwimmerventil aufweist, das eine Entlüftungsöffnung entweder abdichtet oder freigibt.

Bei beiden Ventilen besteht aber die Gefahr, dass die Entlüftungsöffnung durch Schmutzpartikel in der Flüssigkeit verstopft.

Es besteht daher insbesondere die Aufgabe, einen Schnellentlüfter der eingangs erwähnten Art zu schaffen, der sich durch eine vergleichsweise kompakte Bauform auszeichnet und dennoch eine störungsfreie Funktionsweise des im Schnellentlüfter befindlichen Schwimmerventils gewährleistet.

Die erfindungsgemäße Lösung dieser Aufgabe besteht bei dem Schnellentlüfter der eingangs erwähnten Art insbesondere darin, dass der Schwimmer einen im Bereich der Zuströmöffnung vorgesehenen Filtereinsatz übergreift, welcher Filtereinsatz zumindest eine im Schwimmer-Innenraum mündende Filteröffnung hat.

Eine bevorzugte Weiterbildung gemäß der Erfindung besteht darin, dass der Schnellentlüfter modular aufgebaut und ihm dazu der Filtereinsatz zugeordnet ist.

Dabei sieht eine bevorzugte Ausführungsform gemäß der Erfindung vor, dass am Umfangsmantel des Filtereinsatzes unterhalb der zumindest einen Filteröffnung eine umlaufende Drossel- oder Dichtfläche vorgesehen ist, an der eine im Bereich der Zuströmöffnung angeordnete Luftdrossel in ihrer oberen Endstellung anliegt.

Die in den Schnellentlüfter eintretende Luft und das nachfließende Wasser müssen durch dessen Zuströmöffnung an der Luftdrossel vorbei, um in das Innere des Entlüftergehäuses zu gelangen. Treten diese Medien nun sehr schnell ein und strömt insbesondere die Luft schneller als das nachfließende Wasser ein, wird die im Entlüftergehäuse bewegliche Luftdrossel mitgerissen und derart gegen die am Filtereinsatz innenseitig umlaufende Drossel- oder Dichtfläche gepresst, dass der Eingang zum Filtereinsatz vorübergehend verschlossen und der Einströmvorgang unterbrochen ist. Durch ihr "Gewicht" fällt die Luftdrossel aber wieder nach unten, so dass der Einströmzyklus von Neuem beginnen kann. Der Filtereinsatz verhindert, dass das mit jedem Einströmzyklus einströmende Wasser schlagartig bis zum Schließmechanismus gelangen kann; dabei werden gleichzeitig große Schmutzpartikel, wie zum Beispiel Hanf- oder Teflonbandreste, Zunder oder größere Rostteilchen durch den Filtereinsatz daran gehindert, noch weiter in das Schnellentlüfter-Gehäuse und bis zum Schwimmerventil vorzudringen. Die durch den Filtereinsatz durchströmende Luft kann über dessen Filteröffnung in den Schwimmer-Innenraum eindringen. Von dort gelangt die Luft über die Entlüftungsöffnung des Schwimmers gebremst in den Bereich des mit dem Schwimmer zusammenwirkenden Schwimmerventils und seines Schließmechanismus. Etwa mitgerissenes Wasser kann am Schwimmer oder an der Entlüftergehäuse-Innenwand nach unten rinnen. Auf diese Weise wird eine störungsfreie Funktionsweise des im Schnellentlüfter befindlichen Schwimmerventils gewährleistet, wobei sich der erfindungsgemäße Schnellentlüfter zudem durch eine vergleichsweise kompakte Bauform auszeichnet.

Eine bevorzugte Ausführungsform gemäß der Erfindung sieht vor, dass die Entlüftungsöffnung am Umfangsmantel des Schwimmers mit Abstand unterhalb dessen Hutkappe oder Hutspitze angeordnet ist. Damit der Schwimmer nämlich nicht zu träge reagiert, wenn bei schnell einströmenden Medien der Wasserspiegel rasch angehoben wird, wird die in den Schnellentlüfter einströmende Luft verwendet, um vorübergehend das spezifische Gewicht des Schwimmers zu verringern und diesen schneller reagieren zu lassen. Da die Entlüftungsöffnung des Schwimmers mit Abstand unterhalb seiner Hutkappe oder Hutspitze angeordnet ist, sorgt die dadurch unterhalb der Hutkappe oder Hutspitze gebildete Luftblase vorübergehend für den erforderlichen Auftrieb.

Besonders vorteilhaft ist es, wenn der Filtereinsatz im oberen und im unteren Teilbereich seiner Längserstreckung jeweils zumindest eine Filteröffnung hat. Dadurch wird eine Trennung von Luft und Wasser noch zusätzlich begünstigt, weil die Luft regelmäßig durch die obere Filteröffnung aus dem Längsrichtung des Filtereinsatzes orientierte schlitzförmige Filteröffnung aufweist. Durch die schlitzförmige Ausgestaltung dieser Filteröffnung wird ein vollständiges Verstopfen der Filteröffnung vermieden.

Eine Ausführungsform gemäß der Erfindung sieht vor, dass der Schwimmer und das Schnellentlüfter-Gehäuse zumindest einen Flüssigkeitskanal umgrenzen, der vorzugsweise den oberhalb des Schwimmers angeordneten Teilbereich des Schwimmer-Innenraums mit dem unterhalb des Schwimmers angeordneten Teilbereich verbindet. Das durch die in den Bereich des Schwimmerventils einströmende Luft verdrängte Wasser kann somit über den zwischen Schwimmer und Schnellentlüfter-Gehäuse umgrenzenden Flüssigkeitskanal in den Filtereinsatz zurückfließen. Da die Luft somit durch den Filtereinsatz nach innen zum Schwimmerventil hochsteigen kann, während das Wasser außen nach unten verdrängt wird, wird eine unerwünschte Verwirbelung von Luft und Wasser im Vergleich zu einem herkömmlichen Schnellentlüfter weitestgehend vermieden und eine Trennung von Luft und Wasser erreicht.

Eine besonders einfache und vorteilhafte Ausführungsform gemäß der Erfindung sieht vor, dass der Filtereinsatz an seinem Innenumfang einen Ringabsatz hat, dessen der Luftdrossel zugewandte Ringfläche als Drossel- oder Dichtfläche ausgebildet ist. Damit sich die Luftdrossel in ihrer oberen Endstellung sicher und dicht an den Filtereinsatz anlegen kann, ist es vorteilhaft, wenn die Luftdrossel einen Ringabsatz oder Ringflansch trägt, dessen dem Filtereinsatz zugewandte Ringfläche als Drossel- oder Dicht-Gegenfläche ausgestaltet ist.

Dabei sieht eine bevorzugte Ausführungsform gemäß der Erfindung vor, dass die Luftdrossel mit ihrem Ringflansch zwischen dem Ringabsatz des Filtereinsatzes und einer die Zuströmöffnung begrenzenden Anschlagsfläche des Schnellentlüfter-Gehäuses bewegbar ist.

Damit die zuströmende Luft und das nachfließende Wasser möglichst ungehindert die Zuströmöffnung des Schnellentlüfters passieren können, ist es zweckmäßig, wenn an der dem Filtereinsatz abgewandten Ringfläche der Luftdrossel zumindest ein Abstandhalter vorgesehen ist.

Um den Schnellentlüfter bei Bedarf säubern und von eventuellen Schmutzpartikeln befreien zu können, ist es vorteilhaft, wenn zwischen dem Heizungssystem und dem Schnellentlüfter ein Absperrventil oder ein Absperrhahn vorgesehen ist.

Um einer unerwünschten Blasenbildung im Entlüftergehäuse entgegenzuwirken, sieht eine bevorzugte Ausführungsform gemäß der Erfindung vor, dass die Luftdrossel einen auf der dem Filtereinsatz zugewandten und/oder einen auf der dem Filtereinsatz abgewandten Seite vorstehenden, vorzugsweise stabförmigen Luftblasenstecher aufweist.

Weitere Ausgestaltungen der Erfindung ergeben sich aus der folgenden Beschreibung eines erfindungsgemäßen Ausführungsbeispieles in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen Schnellentlüfter für ein Heizungssystem, welcher Schnellentlüfter im Gehäuse-Inneren seines Entlüftergehäuses einen Filtereinsatz aufweist, und
- Fig. 2: den Schnellentlüfter aus Fig. 1, wobei der hier ebenfalls in einem Längsschnitt dargestellte Schnellentlüfter ohne Filtereinsatz verwendet wird.

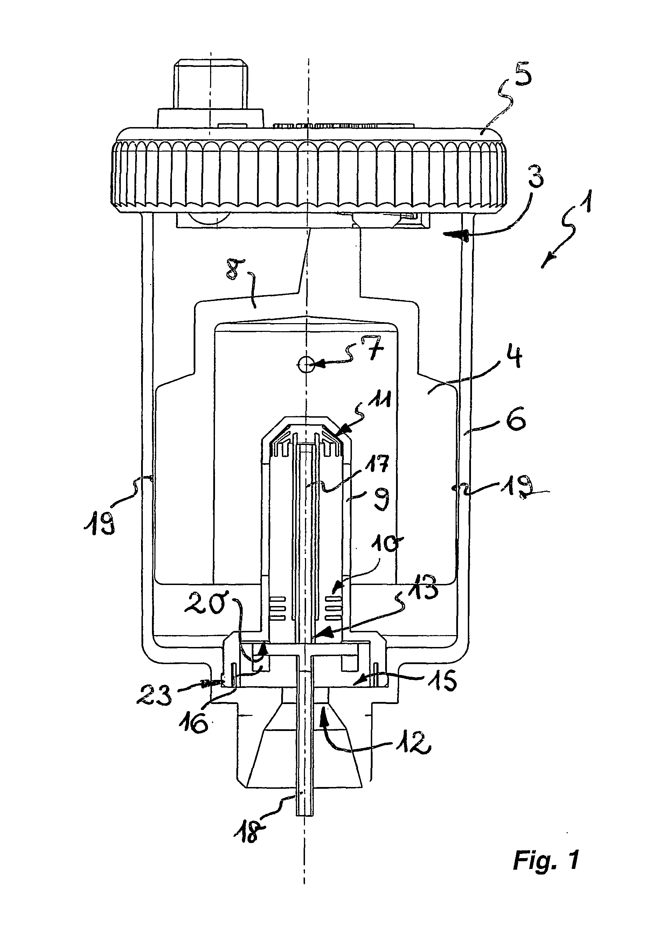

In Fig. 1 ist ein Schnellentlüfter 1 in einem Längsschnitt dargestellt. Der Schnellentlüfter 1 ist dazu bestimmt, beispielsweise bei einer Reparatur oder bei einer Neuinstallation einer Wasserheizung eine automatische Entlüftung der in den Rohren befindlichen Luft sicherzustellen. Der Schnellentlüfter weist dazu ein hier nicht näher dargestelltes Schwimmerventil auf, das einer Luftaustrittsöffnung vorgeschaltet ist und über einen Schließmechanismus 3 mit einem Schwimmer 4 zusammenwirkt. Das Schwimmerventil ist in einen Gehäusedeckel 5 integriert, der auf ein Entlüftergehäuse 6 aufgeschraubt werden kann.

Der im Entlüftergehäuse 6 verschieblich geführte Schwimmer 4 ist hut- oder glockenförmig ausgestaltet. Der Schwimmer-Innenraum des hut- oder glockenförmigen Schwimmers 4 kann über zumindest eine Entlüftungsöffnung 7 entlüftet werden, die hier am Umfangsmantel des Schwimmers 4 mit Abstand unterhalb dessen Hutkappe 8 oder Hutspitze angeordnet ist.

Der Schwimmer 4 übergreift einen zylindrischen Filtereinsatz 9, der zumindest mehrere, im Schwimmer-Innenraum mündende Filteröffnungen 10, 11 hat. Diese Filteröffnungen 10, 11 sind teils im oberen und teils im unteren Teilbereich der Filtereinsatz-Längserstreckung angeordnet und jeweils als in Längsrichtung des Filtereinsatzes 9 orientierte Filterschlitze 10, 11 ausgebildet.

Am Umfangsmantel des Filtereinsatzes 9 ist unterhalb der Filteröffnungen 10 eine Drossel- oder Dichtfläche 20 vorgesehen, an der ein im Bereich der Zuströmöffnung 12 des Schnellentlüfters 1 angeordnete Luftdrossel 13 in ihrer oberen Endstellung anliegt. Diese Drossel- oder Dichtfläche 20 wird durch die nach unten weisende Ringfläche eines Ringabsatzes gebildet, der im unteren Bereich des Filtereinsatzes 9 an dessen Innenumfang vorgesehen ist. Die Drossel- oder Dichtfläche 20 des Filtereinsatzes 9 wirkt mit einer Drossel- oder Dicht-Gegenfläche zusammen, die durch die dem Filtereinsatz zugewandte obere Ringfläche eines an der Luftdrossel 13 vorgesehenen Ringflansches 14 vorgesehen ist.

Die Luftdrossel 13 ist mit ihrem Ringflansch 14 zwischen dem Ringabsatz des Filtereinsatzes 9 und einer die Zuströmöffnung 12 begrenzenden Anschlagfläche 15 des Entlüftergehäuses 6 bewegbar. Damit die zuströmende Luft und das nachfließende Wasser an der Zuströmöffnung 12 die Luftdrossel 13 passieren kann, sind an der dem Filtereinsatz 9 abgewandten Ringfläche der Luftdrossel mehrere, in Umfangsrichtung gleichmäßig voneinander beabstandete Abstandhalter 16 vorgesehen.

Die Luftdrossel 13 weist sowohl auf ihrer dem Filtereinsatz 9 zugewandten als auch auf ihrer dem Filtereinsatz 9 abgewandten Seite jeweils einen zentralen stabförmigen Luftblasenstecher 17, 18 auf, die über die beidseits vorgesehenen Ringflächen des Ringflansches 14 vorstehen und einer eventuellen Luftblasenbildung entgegenwirken sollen.

Die in den Schnellentlüfter 1 eintretende Luft und das nachfließende Wasser müssen durch die Zuströmöffnung 12 an der beweglichen Luftdrossel 13 vorbeiströmen, um in das Innere des Schnellentlüfters 1 zu gelangen. Dringen diese Medien nun sehr schnell ein und strömt insbesondere die Luft schneller als das Wasser, so wird die bewegliche Luftdrossel 13 mit nach oben gerissen und dichtet an der Dichtfläche 20 den Eingang zum Filtereinsatz derart ab, dass der Einströmvorgang unterbrochen wird. Durch ihr Gewicht fällt die bewegliche Luftdrossel 13 aber wieder nach unten und der Einströmzyklus beginnt von Neuem.

Der Filtereinsatz 9 hindert die mit dem Wasser oder der Luft mitgerissenen gröberen Schmutzteilchen am Eindringen in den Schnellentlüfter 1. Dabei werden Teilchen, die schwerer als Wasser sind, nach Beruhigung des Systems wieder in den unteren Bereich des Filtereinsatzes 9 sinken und bei einem der nächsten Entlüftungszyklen mit hoher Wahrscheinlichkeit wieder ausgespült. Schwebeteilchen bleiben dagegen im oberen Teil des Filtereinsatzes 9 hängen. Die oberen und unteren Filteröffnungen 10, 11 sind als Filterschlitze ausgestaltet, die über einen größeren vertikalen Bereich der Filtereinsatz-Längserstreckung angeordnet sind, um ein vollständiges Verstopfen des Filtereinsatzes 9 weitestgehend zu verhindern. Der Filtereinsatz 9 füllt sich von oben nach unten. Bei Bedarf kann der Filtereinsatz gereinigt werden. Dazu ist zwischen dem Schnellentlüfter 1 und dem Heizungssystem ein Absperrventil oder ein Absperrhahn vorgesehen, der eine vorübergehende Demontage des Schnellentlüfters erlaubt, ohne die Funktionsweise der Heizungsanlage zu unterbrechen. Der vorübergehend von der Heizungsanlage demontierte Schnellentlüfter 1 und insbesondere dessen Filtereinsatz 9 kann von außen bequem unter fließendem Wasser gereinigt und/oder leicht ausgeklopft werden.

Die unteren Filteröffnungen 10 und die oberen Filteröffnungen 11 teilen den Filtereinsatz 9 in zwei Funktionsbereiche auf, in denen er für Luft und Wasser durchlässig ist. Dabei wird die in den Filtereinsatz 9 einströmende Luft regelmäßig durch die oberen Filteröffnungen 11 in den Schwimmer-Innenraum des hut- oder glockenförmigen Schwimmers 4 abgegeben. Vom Schwimmer-Innenraum gelangt die Luft durch vorzugsweise mehrere kleine, seitlich angeordnete und genau dimensionierte Entlüftungsöffnungen 7 gebremst in den Bereich des Schwimmerventils und seines Schließmechanismus 3. Etwa mitgerissenes Wasser tropft auf dem nach unten abfallenden Außenbereich des Schwimmers 4 oder auf die seitliche Gehäuse-Innenwand des Entlüftergehäuses 6 und rinnt von dort nach unten.

Das durch die einströmende Luft verdrängte Wasser strömt immer vom Bereich des Schließmechanismus 3 durch den Flüssigkeitskanal 19, der von der Außenseite des Schwimmers 4 und der Gehäuseinnenwand des Entlüftergehäuses 6 umgrenzt wird. Das verdrängte Wasser kann von dort durch die unteren Filteröffnungen 10 in den Filtereinsatz 9 zurückfließen. Dadurch wird erreicht, dass sich Luft und Wasser trennen, das heißt vereinfacht, dass die Luft innen hochsteigt und das Wasser außen nach unten strömt. Dadurch werden unerwünschte Verwirbelungen von Luft und Wasser im Vergleich zu herkömmlichen Schnellentlüftern weitestgehend vermieden.

Durch die hut- oder glockenförmige Ausgestaltung des Schwimmers 4 und durch den durch die Entlüftungsöffnungen 7 bewirkten limitierten Luftdurchlaß vom Schwimmerinnenraum zum Bereich mit dem Schließmechanismus 3 wird gewährleistet, dass bei Eintreten von größeren Luftmengen das spezifische Gewicht des Schwimmers 4 durch diese vorübergehend eingeschlossene Luft verkleinert wird und der Schwimmer durch schnelles Aufsteigen zuerst den Schließmechanismus betätigt und die Luftaustrittsöffnung verschließt. Nur langsam gelangt die Luft durch die seitlichen, genau dimensionierten Entlüftungsöffnungen 7 im Schwimmer 4 in den Bereich mit dem Schließmechanismus 3, wobei der Wasserstand fällt und die Luftaustrittsöffnung wieder geöffnet wird.

Bei dem hier dargestellten Schnellentlüfter 1 wird vermieden, dass das als Heizmedium verwendete Wasser nach einer Entlüftung schlagartig in den Innenraum des Schnellentlüfters 1 und - durch die Trägheit des Schwimmers 4 - bis zum Schließmechanismus 3 gelangen kann. Durch den im Schnellentlüfter 1 vorgesehenen Filtereinsatz 9 werden große Schmutzpartikel daran gehindert, in den Schnellentlüfter 9 und insbesondere in den Bereich seines Schwimmerventils vorzudringen. Der Schwimmer 4 in Verbindung mit dem darin vorgesehenen Filtereinsatz 9 trennen die einströmende Luft vom nachfließenden Wasser und wirken einem Spritzen des Wassers gegen den Schließmechanismus wirkungsvoll entgegen. Durch die hut- oder glockenförmige Ausgestaltung des Schwimmers und die unter seiner Hutkappe oder Hutspitze befindliche Luftblase kann das spezifische Gewicht des Schwimmers vorübergehend derart verringert werden, dass dieser auch bei rasch einströmender Luft und schnell nachfließendem Wasser reaktionsschnell reagieren kann. Dabei zeichnet sich der Schnellentlüfter 1 durch seine sehr kompakte Bauhöhe aus. Da einem Vordringen der Schmutzpartikel bis zum Schließmechanismus 3 entgegengewirkt wird, werden Undichtigkeiten des hier dargestellten Schnellentlüfters vermieden. Da weder Wasser noch Wasserspritzer bis zum Schließmechanismus 3 vordringen können, kann auch kein Wasser aus dem Schnellentlüfter 1 austreten.

Die Luftdrossel 13 verschließt auch bei hohen Eintrittsgeschwindigkeiten der zuströmenden Luft und des mitgerissenen Wassers die Zuströmöffnung 12 und portioniert diese Medien. Der Filtereinsatz 9 hat nicht nur eine Filterfunktion, sondern führt die zuströmende Luft gezielt über seine oberen Filteröffnungen 11 in den Schwimmer-Innenraum des hut- oder glockenförmigen Schwimmers 3, wobei das verdrängte Wasser über die unteren Filteröffnungen 10 getrennt von der Luft abgeführt werden kann. Der Schwimmer 4 und die unterhalb seiner Hutspitze oder Hutkappe gebildete Luftblase erlaubt es bei Eintritt von größeren Luftmengen den Schließmechanismus 3 rasch zu betätigen und die Luftaustrittsöffnung zu schließen. Durch die spezielle Ausgestaltung seines Filtereinsatzes 9, seines Schwimmers 4 und durch die gezielte Führung von Luft und Wasser bietet der Schnellentlüfter 1 eine dreifache Sicherheit gegen eine unerwünschte Bildung von Luftblasen und Wasserspritzern. Durch die Ausgewogenheit des Systems stabilisiert und beruhigt der Schnellentlüfter 1 die Bewegungen der beweglichen Teile und trägt somit zusätzlich zu einer ruhigeren Entlüftung des Heizungssystems bei, wodurch wiederum verhindert wird, dass Wasser und/oder Schmutz bis zum Schließmechanismus 3 gelangen können.

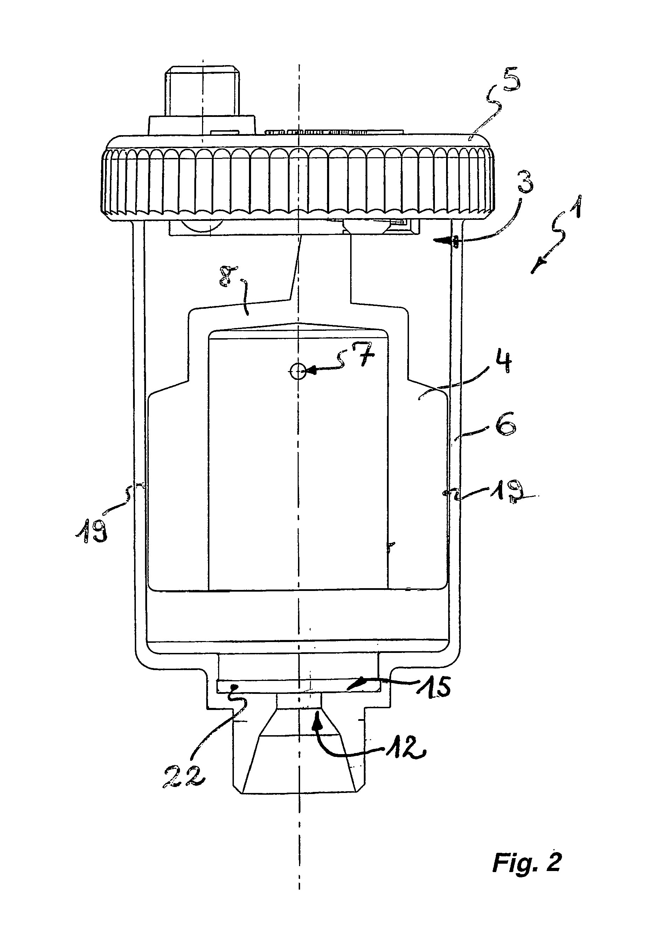

Aus einem Vergleich der Fig. 1 und 2 wird deutlich, dass der Schnellentlüfter 1 modular aufgebaut ist. Der dem Schnellentlüfter 1 zugeordnete Filtereinsatz 9 kann dazu aus dem Gehäuse-Inneren des Entlüftergehäuses 6 entnommen und der Schnellentlüfter 1 auch ohne Filtereinsatz verwendet werden. Während der Schnellentlüfter 1 in Fig. 1 den Filtereinsatz 9 aufweist, wurde der Filtereinsatz 9 in Fig. 2 und die dazugehörige Luftdrossel 13 aus dem Entlüftergehäuse 6 des Schnellentlüfters 1 bedarfsweise entnommen. In Fig. 2 ist erkennbar, dass der Filtereinsatz 9 im Entlüftergehäuse 6 mittels einer Rastverbindung usw. lösbar gehalten ist. Das Entlüftergehäuse 6 weist dazu eine topfförmige Aufnahmeöffnung auf, die den der Zuströmöffnung 12 zugewandten Abschnitt des Filtereinsatzes 9 in sich aufnimmt. Im Bereich der den Topfboden der topfförmigen Aufnahmeöffnung bildenden Anschlagfläche 15 ist eine umlaufende Rastnut 22 vorgesehen, die mit zumindest einer Rastnocke am Filtereinsatz 9 zusammenwirkt.

## Patentansprüche

1. Schnellentlüfter (1) für Heizungssysteme, der in einem Entlüftergehäuse (6) ein Schwimmerventil aufweist, welches einer Luftaustrittsöffnung vorgeschaltet ist, wobei der im Entlüftergehäuse (6) verschieblich geführte und mit dem Schwimmerventil zusammenwirkende Schwimmer (4) hut- oder glockenförmig ausgebildet ist, wobei der Schwimmer-Innenraum des hut- oder glockenförmigen Schwimmers (4) über zumindest eine Entlüftungsöffnung (7) zu entlüften ist, und wobei das Entlüftergehäuse (6) eine im Schwimmer-Innenraum des hut- oder glockenförmigen Schwimmers (4) mündende Zuströmöffnung (12) hat, **dadurch gekennzeichnet, dass** der Schwimmer (4) einen im Bereich der Zuströmöffnung (12) vorgesehenen Filtereinsatz (9) übergreift, der zumindest eine im Schwimmer-Innenraum mündende Filteröffnung (10, 11) hat.

2. Schnellentlüfter nach Anspruch 1, **dadurch gekennzeichnet, dass** am Umfangsmantel des Filtereinsatzes (9) unterhalb der zumindest einen Filteröffnung (10, 11) eine umlaufende Drossel- oder Dichtfläche (20) vorgesehen ist, an der eine im Bereich der Zuströmöffnung (12) angeordnete Luftdrossel (13) in ihrer oberen Endstellung anliegt.

3. Schnellentlüfter nach Anspruch 1 oder 2, **dadurch gekennzeichnet, dass** der Schnellentlüfter (1) modular aufgebaut und ihm dazu der Filtereinsatz (9) zugeordnet ist.

4. Schnellentlüfter nach einem der Ansprüche 1 bis 3, **dadurch gekennzeichnet, dass** die Lüftungsöffnung (7) am Umfangsmantel des Schwimmers (4) mit Abstand unterhalb dessen Hutkappe (8) oder Hutspitze angeordnet ist.

5. Schnellentlüfter nach einem der Ansprüche 1 bis 4, **dadurch gekennzeichnet, dass** der Filtereinsatz (9) im oberen und im unteren Teilbereich seiner Längserstreckung jeweils eine Filteröffnung (10, 11) hat.

6. Schnellentlüfter nach einem der Ansprüche 1 bis 5, **dadurch gekennzeichnet, dass** der Filtereinsatz (9) zumindest eine in Längsrichtung des Filtereinsatzes (9) orientierte schlitzförmige Filteröffnung (10, 11) aufweist.

7. Schnellentlüfter nach einem der Ansprüche 1 bis 6, **dadurch gekennzeichnet, dass** der Schwimmer (4) und das Entlüftergehäuse (6) zumindest einen Flüssigkeitskanal (19) umgrenzen, der vorzugsweise der oberhalb des Schwimmers (4) angeordneten Teilbereich des Schwimmer-Innenraums mit dem unterhalb des Schwimmers angeordneten Teilbereich verbindet.

8. Schnellentlüfter nach einem der Ansprüche 2 bis 7, **dadurch gekennzeichnet, dass** der Filtereinsatz (9) an seinem Innenumfang einen Ringabsatz hat, dessen der Luftdrossel zugewandte Ringfläche als Drossel- oder Dichtfläche (11) ausgebildet ist.

9. Schnellentlüfter nach einem der Ansprüche 2 bis 8, **dadurch gekennzeichnet, dass** die Luftdrossel (13) einen Ringabsatz oder Ringflansch (14) trägt, dessen dem Filtereinsatz (9) zugewandte Ringfläche als Drossel- oder Dicht-Gegenfläche ausgestaltet ist.

10. Schnellentlüfter nach einem der Ansprüche 2 bis 9, **dadurch gekennzeichnet, dass** die Luftdrossel (13) mit ihrem Ringflansch zwischen dem Ringabsatz des Filtereinsatzes (9) und einer die Zuströmöffnung (12) begrenzenden Anschlagsfläche (15) des Entlüftergehäuses (6) bewegbar ist.

11. Schnellentlüfter nach einem der Ansprüche 2 bis 10, **dadurch gekennzeichnet, dass** an der dem Filtereinsatz abgewandten Ringfläche der Luftdrossel (13) zumindest ein Abstandhalter (16) vorgesehen ist.

12. Schnellentlüfter nach einem der Ansprüche 2 bis 11, **dadurch gekennzeichnet, dass** die Luftdrossel (13) einen auf der dem Filtereinsatz (9) zugewandten und/oder einen auf der dem Filtereinsatz (9) abgewandten Seite vorstehenden, vorzugsweise stabförmigen Luftblasenstecher (17, 18) aufweist.

13. Heizungssystem mit einem Schnellentlüfter nach einem der Ansprüche 1 bis 12, **dadurch gekennzeichnet, dass** zwischen dem Heizungssystem und dem Schnellentlüfter (1) ein Absperrventil oder Absperrhahn vorgesehen ist.

## Claims

1. Air vent (1) for heating systems which comprises, in a vent housing (6), a float valve which is provided in front of an air exit aperture, the float (4) that is movably guided in the vent housing (6) and that cooperates with the float valve being hat- or bell-shaped, while the interior of the hat- or bell-shaped float (4) can be vented through at least one vent aperture (7), and wherein the vent housing (6) has an inflow aperture (12) opening into the interior of the hat- or bell-shaped float (4), **characterised in that** the float (4) engages over a filter insert (9) provided in the region of the inflow aperture (12), said filter insert (9) having at least one filter aperture (10, 11) opening into the interior of the float.

2. Air vent according to claim 1, **characterised in that** on the circumferential casing of the filter insert (9) underneath the at least one filter aperture (10, 11) is provided an encircling throttle or sealing surface (20) on which an air throttle (13) arranged in the region of the inflow opening (12) abuts in its upper end position.

3. Air vent according to claim 1 or 2, **characterised in that** the air vent (1) is of modular construction and the filter insert (9) is associated therewith.

4. Air vent according to one of claims 1 to 3, **characterised in that** the vent aperture (7) is arranged on the circumferential casing of the float (4) at a spacing therefrom, underneath the top (8) or tip of its hat.

5. Air vent according to one of claims 1 to 4, **characterised in that** the filter insert (9) has a filter aperture (10, 11) in the upper and lower sections of its longitudinal extent.

6. Air vent according to one of claims 1 to 5, **characterised in that** the filter insert (9) has at least one slot-shaped filter aperture (10, 11) oriented in the longitudinal direction of the filter insert (9).

7. Air vent according to one of claims 1 to 6, **characterised in that** the float (4) and the vent housing (6) define at least one fluid channel (19) which preferably connects the section of the float interior arranged above the float (4) with the section arranged below the float.

8. Air vent according to one of claims 2 to 7, **characterised in that** the filter insert (9) has an annular step on its inner circumference the annular surface of which, facing the air throttle, is constructed as a throttle or sealing surface (11).

9. Air vent according to one of claims 2 to 8, **characterised in that** the air throttle (13) carries an annular step or annular flange (14) the annular surface of which, facing the filter insert (9), is constructed as a mating throttle or sealing surface.

10. Air vent according to one of claims 2 to 9, **characterised in that** the air throttle (13) is movable with its annular flange between the annular step of the filter insert (9) and an abutment surface (15) of the vent housing (6) delimiting the inflow aperture (12).

11. Air vent according to one of claims 2 to 10, **characterised in that** at least one spacer (16) is provided on the annular surface of the air throttle (13) remote from the filter insert.

12. Air vent according to one of claims 2 to 11, **characterised in that** the air throttle (13) has a preferably rod-shaped air bubble pricker (17, 18) protruding on the side facing the filter insert (9) and/or protruding on the side remote from the filter insert (9).

13. Heating system having an air vent according to one of claims 1 to 12, **characterised in that** a shutoff valve or stopcock is provided between the heating system and air vent (1).

## Revendications

1. Purgeur d'air (1) pour systèmes de chauffage qui présente dans un boîtier d'aération (6) un robinet flotteur qui est monté en amont d'une ouverture de sortie d'air, le flotteur (4) coopérant avec le robinet flotteur et guidé à coulissement dans le boîtier d'aération (6) étant réalisé en forme de chapeau ou de cloche, l'espace intérieur du flotteur (4) en forme de chapeau ou de cloche devant être aéré par au moins une ouverture d'aération (7), et le boîtier d'aération (6) ayant une ouverture d'afflux (12) débouchant dans l'espace intérieur du flotteur (4) en forme de chapeau ou de cloche, **caractérisé en ce que** le flotteur (4) recouvre un élément filtrant (9) prévu dans la zone de l'ouverture d'afflux (12), qui présente au moins une ouverture de filtre (10, 11) débouchant dans l'espace intérieur de flotteur.

2. Purgeur d'air selon la revendication 1, **caractérisé en ce qu'**une surface d'étranglement ou d'étanchéité (20) périphérique est prévue sur l'enveloppe périphérique de l'élément filtrant (9) au-dessous de l'au moins une ouverture de filtre (10, 11), sur laquelle repose un étranglement d'air (13) disposé dans la zone de l'ouverture d'afflux (12) dans sa position finale supérieure.

3. Purgeur d'air selon la revendication 1 ou 2, **caractérisé en ce que** le purgeur d'air (1) est structuré de manière modulaire et l'élément filtrant (9) lui est associé à ce sujet.

4. Purgeur d'air selon l'une quelconque des revendications 1 à 3, **caractérisé en ce que** l'ouverture d'aération (7) est disposée sur l'enveloppe périphérique du flotteur (4) à distance au-dessous de son chapeau (8) ou pointe de chapeau.

5. Purgeur d'air selon l'une quelconque des revendications 1 à 4, **caractérisé en ce que** l'élément filtrant (9) présente dans la zone partielle supérieure et dans la zone partielle inférieure de son développement longitudinal respectivement une ouverture de filtre (10, 11).

6. Purgeur d'air selon l'une quelconque des revendications 1 à 5, **caractérisé en ce que** l'élément filtrant (9) présente au moins une ouverture de filtre (10, 11) en forme de fente, orientée dans le sens longitudinal de l'élément filtrant (9).

7. Purgeur d'air selon l'une quelconque des revendications 1 à 6, **caractérisé en ce que** le flotteur (4) et le boîtier d'aération (6) délimitent au moins un canal de liquide (19) qui relie de préférence la zone partielle disposée au-dessus du flotteur (4) de l'espace intérieur de flotteur à la zone partielle disposée au-dessous du flotteur.

8. Purgeur d'air selon l'une quelconque des revendications 2 à 7, **caractérisé en ce que** l'élément filtrant (9) a sur sa périphérie intérieure un décrochement annulaire, dont la surface annulaire tournée vers l'étranglement d'air est réalisée comme une surface d'étranglement ou surface d'étanchéité (11).

9. Purgeur d'air selon l'une quelconque des revendications 2 à 8, **caractérisé en ce que** l'étranglement d'air (13) porte un décrochement annulaire ou une bride annulaire (14), dont la surface annulaire tournée vers l'élément filtrant (9) est configurée comme une surface antagoniste d'étranglement ou d'étanchéité.

10. Purgeur d'air selon l'une quelconque des revendications 2 à 9, **caractérisé en ce que** l'étranglement d'air (13) avec sa bride annulaire peut être déplacé entre le décrochement annulaire de l'élément filtrant (9) et une surface de butée (15) délimitant l'ouverture d'afflux (12) du boîtier d'aération (6).

11. Purgeur d'air selon l'une quelconque des revendications 2 à 10, **caractérisé en ce qu'**au moins un élément d'écartement (16) est prévu sur la surface annulaire éloignée de l'élément filtrant de l'étranglement d'air (13).

12. Purgeur d'air selon l'une quelconque des revendications 2 à 11, **caractérisé en ce que** l'étranglement d'air (13) présente un dispositif de perçage de bulle d'air (17, 18) de préférence en forme de barre, dépassant sur le côté tourné vers l'élément filtrant (9) et/ou sur le côté éloigné de l'élément filtrant (9).

13. Système de chauffage avec un purgeur d'air selon l'une quelconque des revendications 1 à 12, **caractérisé en ce qu'**une soupape d'arrêt ou un robinet d'arrêt est prévu entre le système de chauffage et le purgeur d'air (1).
